# EUROPEAN PATENT SPECIFICATION

(11) **EP 2 058 875 B1**
(45) Date of publication and mention of the grant of the patent: **15.03.2017**
(21) Application number: 08167536.5
(22) Date of filing: 24.10.2008
(51) Int. Cl.: H01M 2/00, H01M 10/42

(54) **Secondary battery with protection circuit module**
Sekundäre Batterie mit Schutzkreislaufmodul
Batterie secondaire dotée d'un modèle de protection de circuit

(30) Priority: 30.10.2007 KR 20070109575
(43) Date of publication of application: 13.05.2009
(73) Proprietor: Samsung SDI Co., Ltd., Yongin-si, Gyeonggi-do (KR)
(72) Inventor: Jang, Young-cheol, c/o Samsung SDI Co., Ltd., Yeongtong-gu, Suwon-si, Gyeonggi-do (KR)
(74) Representative: Walaski, Jan Filip

(56) References cited:
- EP-A2- 1 804 314
- WO-A1-2006/080790

## Description

The present invention relates to a secondary battery with a protection circuit module having one of a hole or a groove for placement of a current interrupting device.

Lighter and more compact portable electric/electronic devices have progressively been developed and produced for cellular phone, notebook, camcorder and so on. The portable electric/electronic devices incorporate a battery pack for operating at any place where an electric power is not installed. Considering economic aspects, the representative battery packs have been Nickel-Cadmium (Ni-Cd), Nickel-Hydrogen (Ni-MH), and Lithium (Li) batteries. Further, a battery pack using a secondary battery capable of charge/discharge has generally been used.

Meanwhile, the lithium secondary battery has been widely used for the portable electric/electronic devices because its operating voltage is three times as low as Ni-Cd or Ni-MH batteries, and its energy density per unit weight is high. The lithium secondary battery is divided into a lithium ion battery using liquid electrolyte and a lithium polymer battery using a high molecular weight electrolyte according to the kind of the electrolyte. According to the manufactured shape, it can be also divided into Cylinder, Prismatic and Pouch types.

Generally, the battery pack using lithium secondary battery comprises an electrode assembly, a can, a bare cell and a protection circuit assembly. Meanwhile, the electrode assembly comprises a positive electrode plate and a negative electrode plate respectively connected to electrode tabs in a collector coated with active materials, and a separator disposed between the positive electrode plate and the negative electrode plate. The electrode assembly is contained in the can having a top opening portion. Further, the bare cell is formed by sealing the top opening portion with a cap assembly. The protection circuit assembly is electrically connected to the bare cell for preventing over-charge/discharge of the bare cell. Further, the protection circuit assembly comprises a protection circuit module controlling either voltage or current at charging/discharging the bare cell, a lower case providing a space to arrange the protection circuit module, and an upper case protecting the protection circuit module from external impacts, etc., by combining with the lower case. Meanwhile, the lower case is formed between the protection circuit module and the bare cell.

The above information is only for enhancement of understanding of the background of the invention and therefore it may contain information that does not form the prior art that is already known to a person of ordinary skill in the art.

WO 2006/080790 and EP 1804314 relate to protection circuit boards. According to the present invention, there is provided a secondary battery according to claim 1.

In order to solve the conventional technical problems, the present invention provides a secondary battery which simplifies a connecting structure of both a bare cell and a protection circuit module, compared with the method of modifying the shape of PTC, etc, so that material and process cost can be significantly reduced.
Moreover, the present invention provides a secondary battery with a protection circuit module having one of a hole and a groove for disposing a current interrupting device for reducing an overall length of the battery.

According to an exemplary embodiment of the present invention, a secondary battery may comprise: an electrode assembly having two electrodes and a separator; a can containing the electrode assembly and electrolyte; a bare cell having a cap assembly having a cap plate for closing an opening portion of the can; a current interrupting device disposed on the cap plate; and a protection circuit module disposed over the bare cell, wherein the protection circuit module comprises a hole at a place corresponding to the current interrupting device.
Moreover, according to another exemplary embodiment of the present invention, the secondary battery may comprise: an electrode assembly having two electrodes and a separator; a can containing the electrode assembly and electrolyte; a bare cell having a cap assembly having a cap plate for closing an opening portion of the can; a current interrupting device disposed on the cap plate; and a protection circuit module disposed over the bare cell, wherein the protection circuit module comprises a groove formed at a place corresponding to the current interrupting device on its bottom surface.

Moreover, according to still another exemplary embodiment of the present invention, the secondary battery may comprise: an electrode assembly having two electrodes and a separator; a can containing the electrode assembly and electrolyte; a bare cell having a cap assembly having a cap plate for closing an opening portion of the can; a current interrupting device disposed on the cap plate; and a protection circuit module disposed over the bare cell, wherein the protection circuit module comprises a groove formed at a place corresponding to the current interrupting device on its upper surface.

The current interrupting device may be disposed at either a hole or a groove. Further, the current interrupting device may be a PTC device.

The PTC device may comprise an upper electrode, a main body and a lower electrode, and the upper electrode, the main body and the lower electrode may be sequentially disposed in a vertical position.
The PTC device may comprise a first electrode, a main body and a second electrode, and the first electrode, the main body and the second electrode may be sequentially disposed along a horizontal line.
A more complete appreciation of the invention, and many of the attendant advantages thereof, will be readily apparent as the same becomes better understood by reference to the following detailed description when considered in conjunction with the accompanying drawings in which like reference symbols indicated the same or similar components, wherein:
FIG. 1A is an exploded perspective view illustrating a protective temperature device and a lead plate and so on, installed at a cap plate of a bare cell, before combining a conventional design for a bare cell with a protection circuit module;
FIG. 1B is a perspective view illustrating the combination of a Positive Temperature Coefficient (PTC) device with a lead plate on a cap plate;
FIG. 2A is an exploded perspective view of a secondary battery constructed as a first exemplary embodiment of the present invention;
FIG. 2B is a front view illustrating a combination state of FIG. 2A;
FIG. 2C is a cross-sectional view taken along the line of I-I of FIG. 2B;
FIG. 2D and 2E are perspective views illustrating a shape of a PTC device according to a first exemplary embodiment of the present invention;
FIG. 3A is a cross-sectional view of a secondary battery according to a second exemplary embodiment of the present invention;
FIG. 3B and 3C are perspective views illustrating a shape of a PTC device according to a second exemplary embodiment of the present invention;
FIG. 4 is a cross-sectional view of a secondary battery according to a third exemplary embodiment of the present invention; and
FIG. 5 is a cross-sectional view of a secondary battery according to a fourth exemplary embodiment of the present invention.

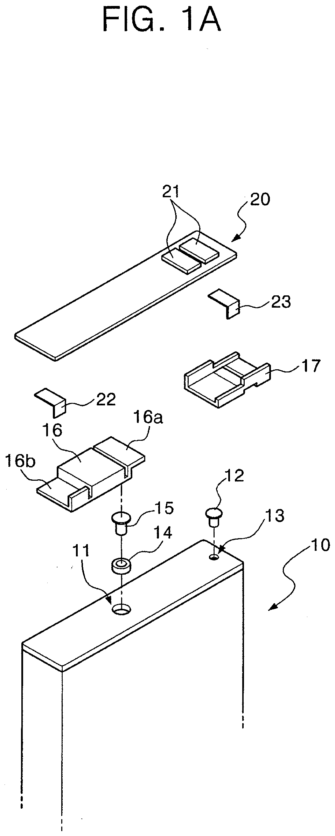

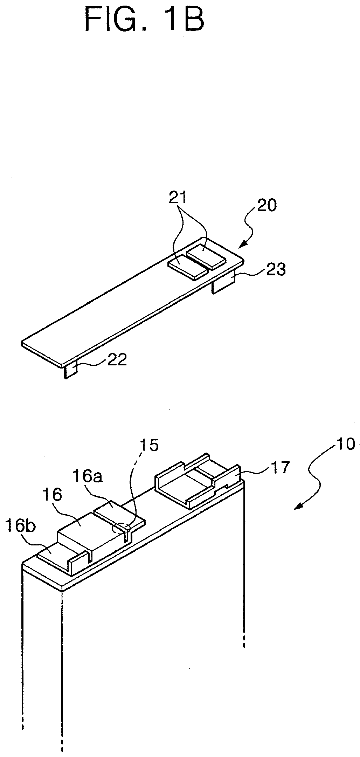

FIG. 1A is an exploded perspective view illustrating a protective temperature device and a lead plate and so on, installed at a cap plate of a bare cell, before combining the conventional bare cell with a protection circuit module, and FIG. 1B is a perspective view illustrating combining both a Positive Temperature Coefficient (PTC) device and a lead plate with a cap plate.

Referring to FIGS. 1A and 1B, a secondary battery comprises an electrode assembly, a can 10 for containing the electrode assembly, a bare cell having a cap assembly, and a protection circuit module 20 for controlling either voltage or current at charge/discharge by combining with the bare cell.

The cap assembly comprises a cap plate 11 closing an opening portion for entering an electrode assembly into a can 10, an electrode terminal 15 insulating the cap plate through a gasket 14 and a lead plate 17 for electrically connecting the bare cell to the protection circuit module 20, and so on. Further, the PTC device 16 as current interrupting device is also combined on the cap plate.

Further, an electrolyte injection hole 13 is formed on one side of the cap plate 11. A cap 12 is installed on the electrolyte injection hole 13 for sealing after injecting electrolyte.

Further, the PTC device 16 may be attached over the cap plate after insulating the PTC with a tape of insulating material, such as Magic Tape. The electrode terminal 15 is connected to an electrical terminal 16a disposed at one side of the PTC device 16, and the other electrical terminal 16b formed at the other side of the PTC device 16 is connected to an electrical terminal 22 of the protection circuit module 20. The cap plate is welded to the lead plate 17 opposite to the side at which the PTC device 16 is installed, from the center of the electrical terminal. The lead plate 17 is connected to other electrical terminal 23 of the protection circuit module. Current for charging/discharging flows through the PTC device 16 connected in series between the protection circuit module 20 and the electrical terminals of the bare cell. When there is any abnormal current flow at charging/discharging, heat is generated, and temperatures rise. Then, the PTC device 16 can cut off any relevant circuits by sensing the heat. Here, an external input/output terminal 21 is formed on the protection circuit module 20 for electrically connecting to outside.

Meanwhile, cost and space is required for forming electrical terminals 16a and 16b of the PTC 16 in order to connect the PTC 16 to the electrode terminal 15 and the electrical terminal 22 of the protection circuit module, respectively, in case of using the PTC device 16, as illustrated in FIGS. 1A and 1B. Further, in order to electrically connect to the protection circuit module, the lead plate 17 connecting to the bare cell, electrical terminals of the PTC device 16 and the electrical terminals 22 and 23 of the protection circuit module are all formed in an L shape or an inverted L shape. A horizontal portion of the L shaped terminals is welded by fixing at either the bare cell or the protection circuit module, and a vertical portion of the L shaped terminals may be welded with overlapping corresponding portions, respectively. Accordingly, the vertical portion can be a critical factor increasing the overall length of the secondary battery. Such a problem may decrease the likelihood of a secondary battery capable of being lighter and having higher capacity.

Moreover, in order to insulate the PTC device 16 having the electric terminals 16a and 16b from the cap plate, an insulating tape should be separately provided, and a separate process may be needed for attaching on the cap plate. Accordingly, the material and process cost may rise.

The present invention will now be described more fully hereinafter with reference to the accompanying drawings, in which exemplary embodiments of the invention are shown.

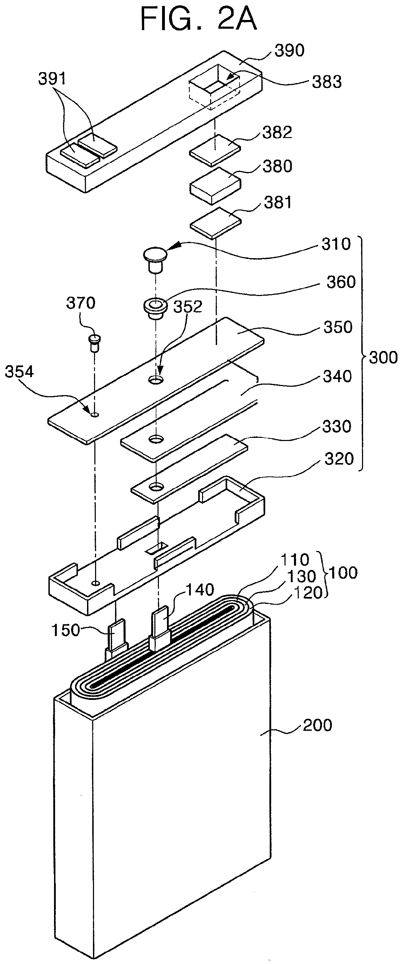

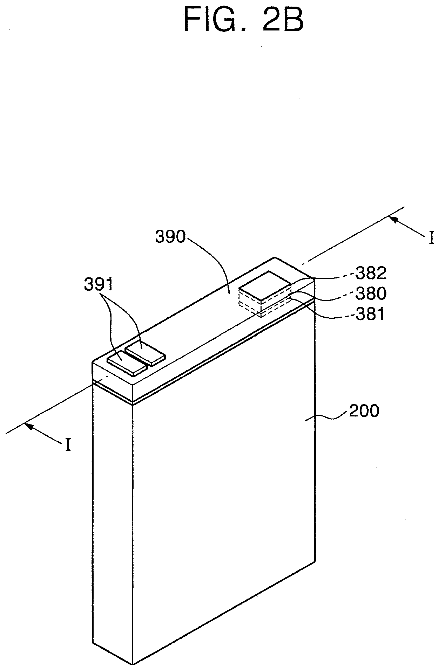

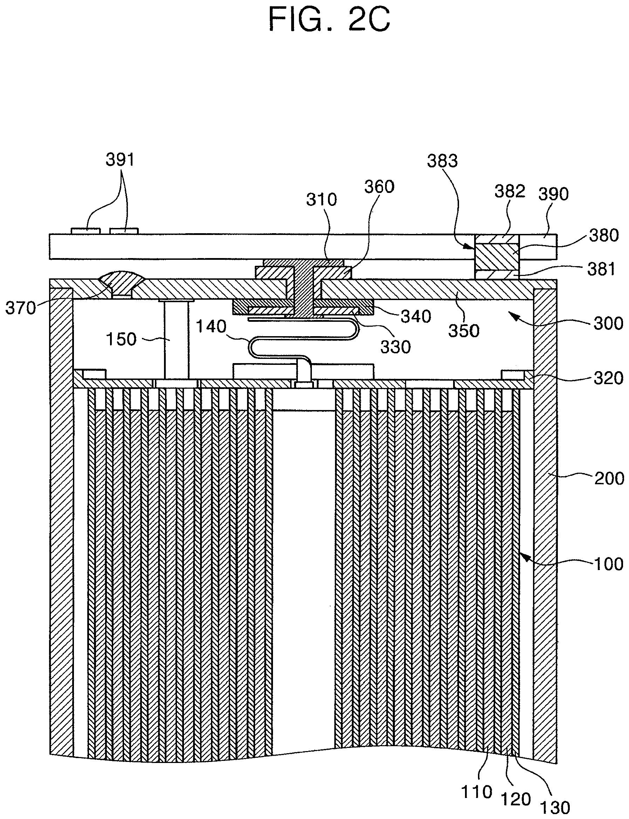

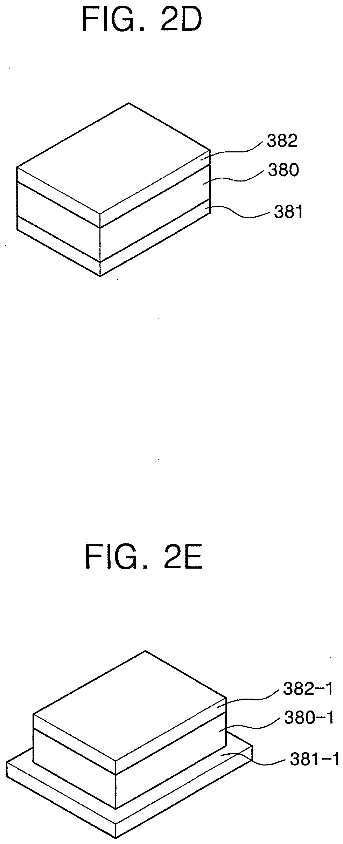

FIG. 2A is an exploded perspective view of a secondary battery according to a first exemplary embodiment of the present invention, FIG. 2B is a front view illustrating a combination state of FIG. 2A, FIG. 2C is a cross-sectional view taken along the line of I-I of FIG. 2B, and FIG. 2D and 2E are perspective views illustrating a shape of a PTC device according to a first exemplary embodiment of the present invention.

Referring to FIGS. 2A through 2C, a secondary battery may comprise an electrode assembly 100, a can 200 containing both the electrode assembly 100 and electrolyte, a bare cell having a cap assembly 300, and a protection circuit module 390 for controlling either current or voltage at charge/discharge by combining with the bare cell.

The electrode assembly 100 may be formed by winding a stacked body of a positive electrode 110, a separator 130 and a negative electrode 120, in a jelly roll shape. The positive electrode 110 may be formed in one of thin film and bar types.

The can 200 may be made of one of aluminum and aluminum alloy and may be formed as a prismatic type like a rectangular parallelepiped. The electrode assembly 100 may be contained in the can 200 through a top opened portion, and the can 200 may play a role of vessel for both the electrode assembly 100 and the electrolyte.

The cap assembly 300 may comprise a cap plate 350 of a plate type corresponding to a size of the top opening portion of the can 200. A terminal hole 352 may be formed on the cap plate 350 for passing an electrode terminal. A tube type gasket 360 may be installed at an external part of the electrode terminal passing through the cap plate 350 for electrically insulating the electrode terminal 310 from the cap plate 350.

An insulating plate 340 may be disposed under the cap plate 350, and a terminal plate 330 may be disposed under the insulating plate 340.

Further, a positive electrode tab 150 and a negative electrode tab 140 may be welded after drawing out of the positive electrode 110 and the negative electrode 120, respectively. Meanwhile, the negative electrode tab 140 may be welded in a folded state.

Meanwhile, an insulating case 320 may be installed over the electrode assembly 100 for insulating the electrode assembly 100 from the cap assembly 300 and covering the electrode assembly 100. The insulating case 320 may be high molecular weight resin, preferably Poly-Propylene. Further, a lead hole may be formed at the center of the insulating case for passing the negative electrode tab 140. Further, an electrolyte-passing hole may be formed on a side of the insulating case.

Further, an electrolyte injecting hole 354 may be formed on a side of the cap plate 350. In order to seal the electrolyte injecting hole 354 after injecting electrolyte, a cap 370 may be installed.

Further, the cap assembly 300 may comprise the cap plate 350 for closing the top opening portion for guiding the electrode assembly 100 in the can 200. Further, the electrode terminal 310 insulated by the gasket 360 may be inserted in the cap plate 350.

Meanwhile, the PTC device of the current interrupting device may be disposed on a side of the cap plate.

Here, the PTC device may play a role of cutting off any relevant circuitry by sensing heat, when abnormal charge/discharge current happens.

The PTC device, as illustrated in FIG. 2D, may comprise an upper electrode 382, a lower electrode 381 and a main body being made of a material capable of sensing any heat existing between the upper and lower electrodes. Further, the upper electrode 382, the main body 380 and the lower electrode 381 may be sequentially disposed along a vertical line. Here, the upper and lower electrodes may be made of a metal plate like nickel, etc. Further, the lower electrode 381 may be welded to the cap plate 350, while contacting surfaces of both the lower electrode 381 and the cap plate 350. Further, the upper electrode 382 may be electrically connected to the protection circuit module 390.

In other words, the lower electrode 381 of the PTC device may be directly connected to the cap plate 350 without interposing any insulating material at the location where the conventional PTC device is attached. Meanwhile, the connecting may be carried out by using a conductive adhesive, welding, and so on. Accordingly, because the lower electrode 381 is directly connected to the cap plate 350, insulating tape does not have be used for insulating the PTC device from the cap plate, unlike in the conventional art.

Further, the lower plate 381-1, as shown in FIG. 2E, may be horizontally extended in comparison with both the main body 380-1 and the upper electrode 382-1 so as to form a terminal for welding. Here, the welding may be carried out at the area of the terminal horizontally extended. Considering the cap plate and the lower electrode 381-1 made of a metal having low resistance and high thermal conductivity such as aluminum, etc., the welding may be carried out by a conventional laser method.

Meanwhile, the protection circuit module 390 may be disposed over the cap plate 350. On the protection circuit module 390, an external input/output terminal 391 may be formed for electrically connecting to the outside.

Further, according to a first exemplary embodiment of the present invention, a hole 383 may be formed through the protection circuit module 390 at a place corresponding to the PTC device.

In a case where the protection circuit module 390 is combined with the bare cell, the hole 383, as illustrated in FIG. 2B, may contain at least a part of the PTC device, thereby reducing the distance between the protection circuit module 390 and the cap plate 350. Accordingly, the protection circuit module may be easily combined with the bare cell.

It will be understood by those skilled in the art that a variety of modifications and variations of the shape of the hole 383 may be made to the exemplary embodiments herein. Accordingly, the present invention does not limit the shape of the hole.

Generally, both the electrode terminal 310 and the PTC device may be protruded against the cap plate 390, as illustrated in FIG. 2C. Here, it is possible that the electrode terminal 310 may not be protruded against the cap plate by reducing its thickness. The main body 380, however, may be limited in reducing its thickness because the PTC device of the current interrupting device is made of a heat-sensing material for cutting off any relevant circuitry after sensing heat. Accordingly, the total length of a secondary battery may be unavoidably extended due to the thickness of the PTC device.

In the exemplary embodiment of the present invention, however, the total length of a secondary battery may be shortened by providing a hole 383 for compensating for the thickness of the PTC device.

Meanwhile, the electrode terminal 310 may be disposed at the center of the cap assembly 300 as in the conventional art, and may be electrically connected to the protection circuit module 390.

Further, a similar hole to the hole 383 may be formed at a place corresponding to the electrode terminal 310 on the protection circuit module 390 for containing the electrode terminal 310 in case of combining the protection circuit module 390 with the bare cell, thereby reducing the distance between the protection circuit module 390 and the cap plate 350.

The electrode terminal 310 may not be protruded against the cap plate 390 by reducing its thickness. Further, even though the electrode terminal 310 is protruded against the cap plate 390, it may be possible that the distance between the protection circuit module and the cap plate may be reduced by forming another hole at a place corresponding to the electrode terminal.

Accordingly, the length corresponding to a vertical portion occupying the conventional L shaped electrical terminals may be unnecessary for electrically connecting in the present invention. Especially, the total length of a secondary battery may be shortened by providing a hole through the protection circuit module for compensating for the thickness of the PTC device.

Further, because the lower electrode 381 is directly connected to the cap plate 350, magic tape does not have to be used for insulating the PTC device from the cap plate, unlike the conventional art.

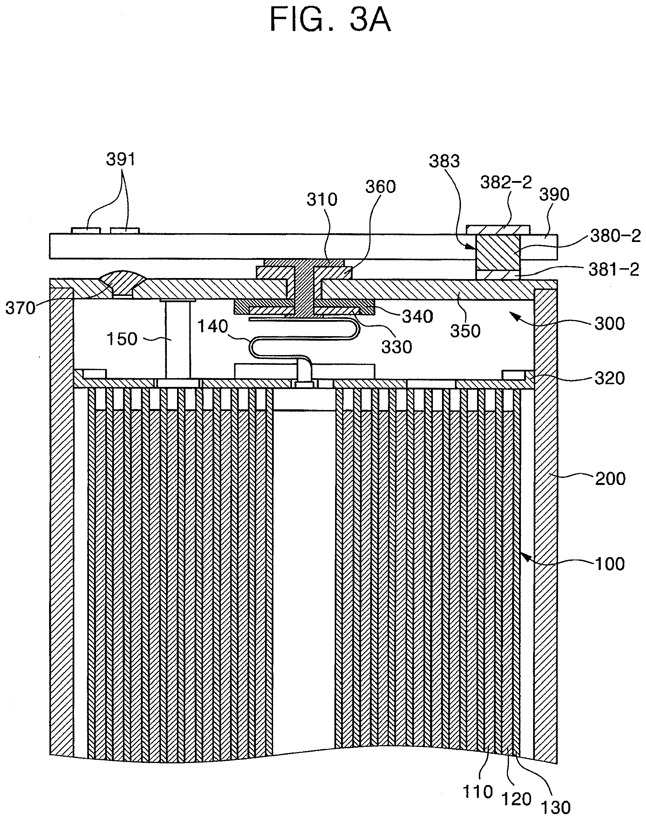

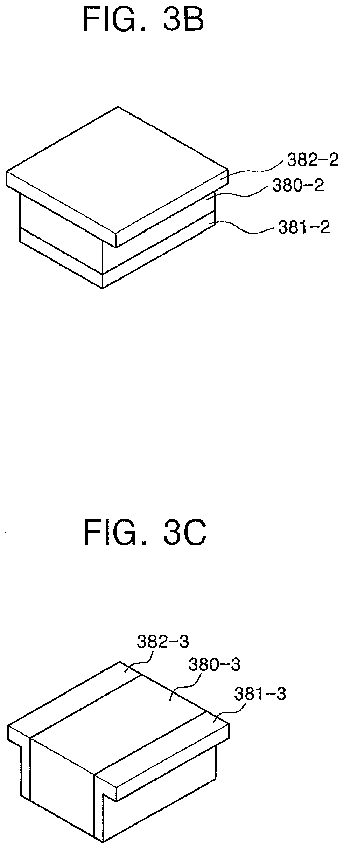

FIG. 3A is a cross-sectional view of a secondary battery according to a second exemplary embodiment of the present invention, FIG. 3B and 3C are perspective views illustrating a shape of a PTC device according to a second exemplary embodiment of the present invention.

The secondary battery according to the exemplary embodiment of the present invention may be substantially similar to the first exemplary embodiment except for the following.

Referring to FIGS. 3A through 3C, in the secondary battery according to the second exemplary embodiment of the present invention, a protection circuit module 390 may be disposed over a cap plate 350, an external input/output terminal 391 may be formed on the protection circuit module 390 for electrically connecting to outside.

Further, in the secondary battery according to the second exemplary embodiment of the present invention, as the exemplary embodiment of the present invention, a hole 383 may be formed through the protection circuit module 390 at a place corresponding to the PTC device.

Here, a PTC device of current interrupting device may be disposed on a side of the protection circuit module 390.

In the first exemplary embodiment of the present invention, the PTC device may be combined with the protection circuit module, while the PTC device is combined to the cap plate. However, the PTC device may be connected over the protection circuit module in the second exemplary embodiment of the present invention.

In other words, in the second exemplary embodiment of the present invention, the PTC device may be inserted into the hole 383 of the protection circuit module from the top of the protection circuit module and directly connected to the cap plate. Accordingly, because the lower electrode 381 is directly connected to the cap plate 350, magic tape does not have to be used for insulating the PTC device from the cap plate, unlike the conventional art.

The PTC device may comprise an upper electrode 382-2, a lower electrode 381-2, and a main body 380-2. Further, the upper electrode 382-2, the main body 380-2 and the lower electrode 381-2 may be sequentially disposed along a vertical line. Here, the upper electrode 382-2, as shown in FIG. 3B, may be horizontally extended in comparison with both the main body 380-2 and the lower electrode 382-2 so as to form a terminal for placing on the protection circuit module at combining the PTC device from the top of the protection circuit module.

Further, the upper and lower electrodes may be made of metallic thin film, the lower electrode 381-2 may be connected to the cap plate 110 with a surface contact, and the upper electrode 380-2 may be electrically connected to the protection circuit module 390.

Considering the cap plate 110 and the lower electrode 381-2 made of a metal having low resistance and high thermal conductivity such as aluminum, etc., welding may be carried out by a conventional laser method. Further, the terminal of the upper electrode 380-2 may be attached on the cap plate 110 by using conductive adhesive, soldering or welding, and so on.

Further, in the second exemplary embodiment of the present invention, the upper electrode 382-2, the main body 380-2 and the lower electrode 381-2 may not be sequentially disposed along a vertical line. The first electrode 382-3, the main body 380-3 and the second electrode 381-3 may be sequentially disposed along a horizontal line.

Here, the upper portions of both the first electrode 382-3 and the second electrode 381-3 may be protruded so that the PTC device may be disposed on the protection circuit module in the process of connecting the PTC device over the protection circuit module. The vertical sections of both the first electrode 382-3 and the second electrode 381-3 may be formed as a shape of either "┐ " or " ┌", so that the PTC device may be disposed on the protection circuit module by the upper portions of both the first electrode 382-3 and the second electrode 381-3 protruded.

Accordingly, the length corresponding to a vertical portion occupying the conventional L type electric terminals may be unnecessary for electrically connecting. Especially, the total length of a secondary battery may be shortened by providing a hole through the protection circuit module for compensating for the thickness of the PTC device.

Further, because the lower electrode 381 is directly connected to the cap plate 350, magic tape does not have to be used for insulating the PTC device from the cap plate, unlike the conventional art.

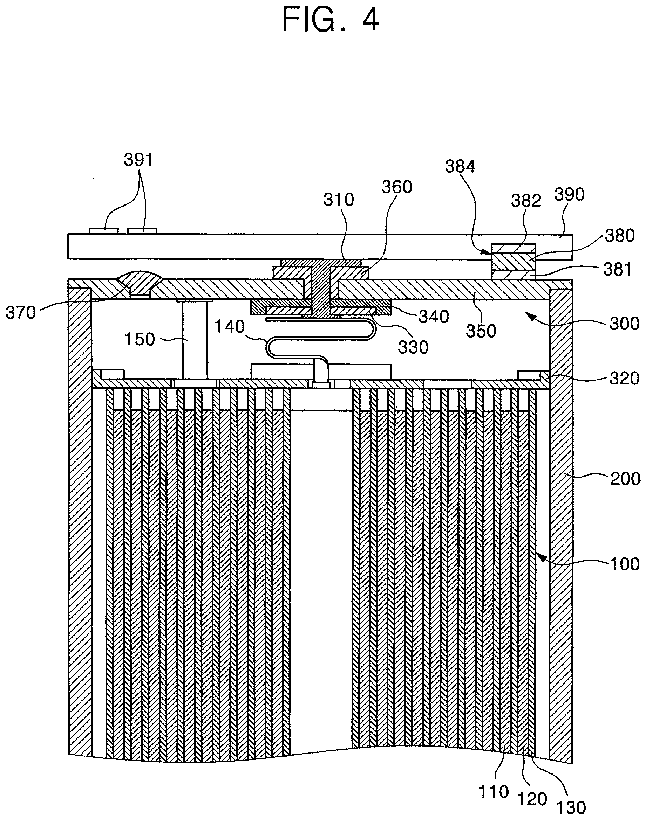

FIG. 4 is a cross-sectional view of a secondary battery according to a third exemplary embodiment of the present invention.

The secondary battery according to the exemplary embodiment of the present invention may be substantially similar to the first exemplary embodiment except for the following.

Referring to FIG. 4, in the secondary battery according to the third exemplary embodiment of the present invention, an external input/output terminal 391 may be formed on a protection circuit module 390 for electrically connecting to outside. Further, a groove 384 may be formed at a place corresponding to the PTC device, in the bottom surface of the protection circuit module 390, unlike the first exemplary embodiment of the present invention.

It will be understood by those skilled in the art that a variety of modifications and variations of the shape of the groove may be made to the exemplary embodiments herein. Accordingly, the shape of the groove may not be limited thereto in the present invention.

In a case where the protection circuit module 390 is combined with the bare cell, the groove 384, as illustrated in FIG. 4, may contain the PTC device, thereby reducing the distance between the protection circuit module 390 and the cap plate 350. Accordingly, the protection circuit module may be easily combined with the bare cell.

The PTC device, as illustrated in FIG. 2D, may comprise an upper electrode 382, a lower electrode 381 and a main body 380 being made of a material capable of sensing any heat existing between the upper and lower electrodes, and may be formed as FIG. 2E. Accordingly, the shape of the PTC device may not be limited thereto in the present invention. Here, the upper and lower electrodes may be made of metallic thin film, the lower electrode 381 may be connected to the cap plate 110 with a surface contact, and the upper electrode 380 may be electrically connected to the protection circuit module 390.

Accordingly, the length corresponding to a vertical portion occupying the conventional L type electric terminals may be unnecessary for electrically connecting. Especially, the total length of a secondary battery may be shortened by providing a hole through the protection circuit module for compensating for the thickness of the PTC device.

Further, because the lower electrode 381 is directly connected to the cap plate 350, magic tape does not have to be used for insulating the PTC device from the cap plate, unlike the conventional art.

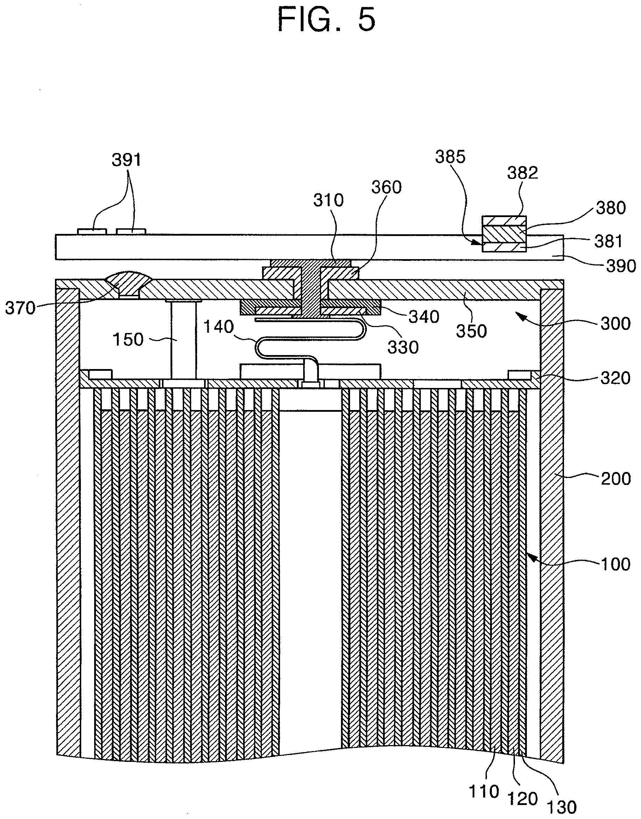

FIG. 5 is a cross-sectional view of a secondary battery according to a fourth exemplary embodiment of the present invention.

The secondary battery according to the exemplary embodiment of the present invention may be substantially similar to the first exemplary embodiment except for the following.

Referring to FIG. 5, in the secondary battery according to the fourth exemplary embodiment of the present invention, a protection circuit module 390 may be disposed over a cap plate 350, an external input/output terminal 391 may be formed on a protection circuit module 390 for electrically connecting to outside. Further, a groove 385 may be formed at a place corresponding to the PTC device, in the top surface of the protection circuit module 390, unlike the first exemplary embodiment of the present invention.

Here, the groove 385 may be a shape of tetrahedron. It will be understood by those skilled in the art that a variety of modifications and variations of the shape of the groove may be made to the exemplary embodiments herein. Accordingly, the shape of the groove may not be limited thereto in the present invention.

Further, the upper electrode 382 of the PTC device may be electrically connected to a cap plate 350, and the lower electrode 381 of the PTC device may be electrically connected to a protection circuit module 390.

In the fourth exemplary embodiment of the present invention, when the protection circuit module 390 is combined with the bare cell, the PTC device may not be disposed between the protection circuit module and the cap plate. Accordingly, the groove 385 may contain the PTC device, thereby reducing the distance between the protection circuit module 390 and the cap plate 350. Accordingly, the protection circuit module may be easily combined with the bare cell.

Accordingly, the length corresponding to a vertical portion occupying the conventional L type electric terminals may be unnecessary for electrically connecting. Especially, the total length of a secondary battery may be shortened by providing a groove in the protection circuit for compensating for the thickness of the PTC device.

Further, because the lower electrode 381 is directly connected to the cap plate 350, magic tape does not have to be used for insulating the PTC device from the cap plate, unlike the conventional art,
It will be understood by those skilled in the art that a variety of modifications and variations of the grooves 160 may be made to the exemplary embodiments herein without departing from the scope of the present invention as defined in the claims.

Although the present invention has been described with reference to certain exemplary embodiments thereof, it will be understood by those skilled in the art that a variety of modifications and variations may be made to the present invention without departing from the scope of the present invention as defined in the appended claims.

## Claims

1. A secondary battery comprising:
a can (200) including an opening portion;
an electrode assembly (100) disposed in the can (200);
a cap assembly (300) having a cap plate (350) disposed at the opening portion of the can (200), and an electrode terminal (310) insulated from the cap plate;
a protection circuit module (390) disposed over the cap assembly (300); and
a current interrupting device (380, 381, 382) disposed between the cap plate (350) and the protection circuit module,
wherein the protection circuit module (390) is in contact with the electrode terminal (310) and the current interrupting device (380, 381, 382), and the current interrupting device (380, 381, 382) is not in contact with the electrode terminal (310), wherein the protection circuit module comprises a hole (383) or groove (384, 385) positioned to correspond to the current interrupting device, and wherein the current interrupting device is disposed in the hole or in the groove.

2. The secondary battery of Claim 1, wherein the current interrupting device is a positive temperature coefficient PTC device.

3. The secondary battery of Claim 2, wherein the PTC device comprises an upper electrode (382), a main body (380) and a lower electrode (381).

4. The secondary battery of Claim 3, wherein the upper electrode, the main body and the lower electrode are sequentially disposed in a vertical position, and wherein the upper electrode is in contact with the protection circuit module and the lower electrode is in contact with the cap plate.

5. The secondary battery of Claim 3 or 4, wherein a portion around the lower electrode is horizontally extended to a side in comparison with both the main body and the upper electrode.

6. The secondary battery of Claim 3 or 4, wherein a portion around the upper electrode is horizontally extended to a side in comparison with both the main body and the lower electrode.

7. The secondary battery of Claim 6, wherein the upper electrode (382-2) is disposed on the protection circuit module.

8. The secondary battery of Claim 2, wherein the PTC device comprises a first electrode, a main body and a second electrode; and,
wherein the first electrode, main body and second electrode are sequentially disposed along a horizontal line.

9. The secondary battery of Claim 8, wherein the first and second electrodes have a shape of either an inverted 'L' or an 'L'-shape on the vertical section.

10. The secondary battery of any one of the preceding claims, wherein the secondary battery further comprises an electrode terminal, and the protection circuit module comprises a hole in a place corresponding to the electrode terminal.

11. The secondary battery of any one of the preceding claims, wherein the groove (384) is disposed on a bottom surface of the protection circuit module (390).

12. The secondary battery of any one of claims 1 to 10, wherein the groove (385) is disposed on an upper surface of the protection circuit module (390).

## Patentansprüche

1. Sekundärbatterie, umfassend:
ein Gehäuse (200) mit einem Öffnungsabschnitt;
eine Elektrodenbaugruppe (100), die in dem Gehäuse (200) angeordnet ist;
eine Deckelbaugruppe (300) mit einer Deckelplatte (350), die an dem Öffnungsabschnitt des Gehäuses (200) angeordnet ist, und einem Elektrodenanschluss (310), der von der Deckelplatte isoliert ist;
ein Schutzkreismodul (390), das über der Deckelbaugruppe (300) angeordnet ist; und
eine Stromunterbrechungsvorrichtung (380, 381, 382), die zwischen der Deckelplatte (350) und dem Schutzkreismodul angeordnet ist,
wobei das Schutzkreismodul (390) mit dem Elektrodenanschluss (310) und der Stromunterbrechungsvorrichtung (380, 381, 382) in Kontakt steht und die Stromunterbrechungsvorrichtung (380, 381, 382) nicht mit dem Elektrodenanschluss (310) in Kontakt steht, wobei das Schutzkreismodul ein Loch (383) oder eine Nut (384, 385) umfasst, das/die so angeordnet ist, dass es/sie der Stromunterbrechungsvorrichtung entspricht, und wobei die Stromunterbrechungsvorrichtung in dem Loch oder in der Nut angeordnet ist.

2. Sekundärbatterie nach Anspruch 1, wobei die Stromunterbrechungsvorrichtung eine Vorrichtung mit positivem Temperaturkoeffizienten (*positive temperature coefficient -* PTC) ist.

3. Sekundärbatterie nach Anspruch 2, wobei die PTC-Vorrichtung eine obere Elektrode (382), einen Hauptkörper (380) und eine untere Elektrode (381) umfasst.

4. Sekundärbatterie nach Anspruch 3, wobei die obere Elektrode, der Hauptkörper und die untere Elektrode nacheinander in einer vertikalen Position angeordnet sind und wobei die obere Elektrode mit dem Schutzkreismodul in Kontakt steht und die untere Elektrode mit der Deckelplatte in Kontakt steht.

5. Sekundärbatterie nach Anspruch 3 oder 4, wobei ein Abschnitt um die untere Elektrode herum, verglichen mit dem Hauptkörper und der oberen Elektrode, horizontal nach einer Seite ausgedehnt ist.

6. Sekundärbatterie nach Anspruch 3 oder 4, wobei ein Abschnitt um die obere Elektrode herum, verglichen mit dem Hauptkörper und der unteren Elektrode, horizontal nach einer Seite ausgedehnt ist.

7. Sekundärbatterie nach Anspruch 6, wobei die obere Elektrode (382-2) an dem Schutzkreismodul angeordnet ist.

8. Sekundärbatterie nach Anspruch 2, wobei die PTC-Vorrichtung eine erste Elektrode, einen Hauptkörper und eine zweite Elektrode umfasst; und
wobei die erste Elektrode, der Hauptkörper und die zweite Elektrode nacheinander entlang einer horizontalen Linie angeordnet sind.

9. Sekundärbatterie nach Anspruch 8, wobei die erste und zweite Elektrode am vertikalen Abschnitt die Form eines umgekehrten "L" oder eine "L"-Form aufweisen.

10. Sekundärbatterie nach einem der vorangehenden Ansprüche, wobei die Sekundärbatterie ferner einen Elektrodenanschluss umfasst und das Schutzkreismodul an einer Stelle, die dem Elektrodenanschluss entspricht, ein Loch umfasst.

11. Sekundärbatterie nach einem der vorangehenden Ansprüche, wobei die Nut (384) an einer Bodenfläche des Schutzkreismoduls (390) angeordnet ist.

12. Sekundärbatterie nach einem der Ansprüche 1 bis 10, wobei die Nut (385) auf einer oberen Oberfläche des Schutzkreismoduls (390) angeordnet ist.

## Revendications

1. Batterie secondaire comprenant :
un boîtier (200) comprenant une partie d'ouverture ;
un ensemble d'électrodes (100) disposé dans le boîtier (200) ;
un ensemble de recouvrement (300) comportant une plaque de recouvrement (350) disposée au niveau de la partie d'ouverture du boîtier (200), et une borne d'électrode (310) isolée de la plaque de recouvrement ;
un module de circuit de protection (390) disposé sur l'ensemble de recouvrement (300) ; et
un dispositif d'interruption de courant (380, 381, 382) disposé entre la plaque de recouvrement (350) et le module de circuit de protection,
dans laquelle le module de circuit de protection (390) est en contact avec la borne d'électrode (310) et le dispositif d'interruption de courant (380, 381, 382), et le dispositif d'interruption de courant (380, 381, 382) n'est pas en contact avec la borne d'électrode (310), le module de circuit de protection comprenant un orifice (383) ou une rainure (384, 385) positionné de manière à correspondre au dispositif d'interruption de courant, et le dispositif d'interruption de courant étant disposé dans l'orifice ou dans la rainure.

2. Batterie secondaire selon la revendication 1, dans laquelle le dispositif d'interruption de courant est un dispositif à coefficient de température positif, PTC.

3. Batterie secondaire selon la revendication 2, dans laquelle le dispositif à PTC comprend une électrode supérieure (382), un corps principal (380) et une électrode inférieure (381).

4. Batterie secondaire selon la revendication 3, dans laquelle l'électrode supérieure, le corps principal et l'électrode inférieure sont disposés séquentiellement dans une position verticale, et dans laquelle l'électrode supérieure est en contact avec le module de circuit de protection et l'électrode inférieure est en contact avec la plaque de recouvrement.

5. Batterie secondaire selon la revendication 3 ou 4, dans laquelle une partie autour de l'électrode inférieure s'étend horizontalement vers un côté comparé à la fois au corps principal et à l'électrode supérieure.

6. Batterie secondaire selon la revendication 3 ou 4, dans laquelle une partie autour de l'électrode supérieure s'étend horizontalement vers un côté comparé à la fois au corps principal et à l'électrode inférieure.

7. Batterie secondaire selon la revendication 6, dans laquelle l'électrode supérieure (382-2) est disposée sur le module de circuit de protection.

8. Batterie secondaire selon la revendication 2, dans laquelle le dispositif à PTC comprend une première électrode, un corps principal et une deuxième électrode ; et
la première électrode, le corps principal et la deuxième électrode étant disposés séquentiellement le long d'une ligne horizontale.

9. Batterie secondaire selon la revendication 8, dans laquelle les première et deuxième électrodes ont soit une forme de L inversé, soit une forme de L en coupe verticale.

10. Batterie secondaire selon l'une quelconque des revendications précédentes, la batterie secondaire comprenant en outre une borne d'électrode, et le module de circuit de protection comprenant un orifice à un emplacement correspondant à la borne d'électrode.

11. Batterie secondaire selon l'une quelconque des revendications précédentes, dans laquelle la rainure (384) est disposée sur une surface inférieure du module de circuit de protection (390).

12. Batterie secondaire selon l'une quelconque des revendications 1 à 10, dans laquelle la rainure (385) est disposée sur une surface supérieure du module de circuit de protection (390).
